# EUROPEAN PATENT APPLICATION

(11) **EP 4 015 816 A1**
(43) Date of publication of application: **22.06.2022**
(21) Application number: 20215554.5
(22) Date of filing: 18.12.2020
(51) Int. Cl.: F03D 13/10, F03D 13/40, F03D 80/00

(54) **METHOD FOR INSTALLING A SEALING ASSEMBLY ON AN OPENING OF A WIND TURBINE COMPONENT**

(71) Applicant: Vestas Wind Systems A/S, 8200 Aarhus N (DK)
(72) Inventor: JENSEN, Mads Møller, 8210 Aarhus V (DK)
(74) Representative: Vestas Patents Department

(57) **Abstract**

A method of installing a sealing assembly (58, 140, 160) proximate an opening (36, 40) of a wind turbine component (30, 14), the wind turbine component (30, 14) having a wall about a periphery of the opening (36, 40). The method comprises providing an inflatable tube (72), providing a membrane (70, 142, 162) sized to cover the opening (36, 40) in the wind turbine component (30, 14), partially inflating the tube (72) such that tube is adjacent or contacts the wall about the periphery of the opening (36, 40), disposing the membrane (70, 142, 162) between the tube (72) and the wall and further inflating the tube (72) such that the tube exerts a force sufficient to secure the membrane (70, 142, 162) against the wall to thereby seal the opening (36, 40) of the wind turbine component (30, 14).

## Description

### Technical Field

This invention relates generally to wind turbines, and more particularly to a cover for sealing openings in wind turbine components and a method for installing such a cover.

### Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator.

To facilitate the construction of the tower, the tower is made of numerous tower sections that are stacked one on top of another at the wind turbine site. Because of their size, those tower sections are fabricated at an offsite manufacturing facility and then transported to the wind turbine site. While being fabricated, various wind turbine components, such as electrical equipment/components, may be installed in some of those tower sections. Covers may be used to close off the open ends of a tower section to protect the interior of the tower section, as well as the wind turbine components disposed therein, from water, humidity, dust, dirt, foreign objects, and rodents, while the tower sections are being stored after being fabricated and before they are installed to create the tower.

The nacelle is also fabricated at an offsite facility and then transported to the wind turbine site. Like the tower section, various wind turbine components, including electrical equipment/components, may be installed in the nacelle while it is being fabricated. The nacelle may include a downwardly-extending, cylindrical section, which is used to join the nacelle to the top of the tower. That cylindrical section includes an opening that also needs to be sealed to protect the interior of the nacelle as well as the wind turbine components disposed therein.

To this end, covers have been devised for closing off the openings in tower sections and nacelles. Prior covers, however, are cumbersome to install, ill-fitting, and unable to protect the interior of the tower sections and nacelle from environmental factors, such as excessive humidity which may be harmful to the wind turbine components, especially the electrical equipment.

Thus, there remains a need for a cover that sufficiently seals the interior of a tower section or nacelle while these wind turbine components are being stored or transported. More particularly, there is need for a cover that seals the interior of the tower section or nacelle so that the environmental factors may be sufficiently controlled and maintained.

### Summary

A method of installing a sealing assembly proximate an opening of a wind turbine component is disclosed, wherein a wall is disposed about a periphery of the opening. The method includes providing an inflatable tube; providing a membrane sized to cover the opening in the wind turbine component; partially inflating the tube such that the tube contacts or is disposed adjacent the wall about the periphery of the opening; disposing the membrane between the tube and the wall; and further inflating the tube such that the tube exerts a force sufficient to secure the membrane against the wall to thereby seal the opening of the wind turbine component.

In one embodiment, the first inflating step inflates the tube to a first pressure and the second inflating step inflates the tube to a second pressure that is greater than the first pressure. For example, the first pressure may be approximately 0.5 bar and the second pressure may be approximately 3.0 bar. At the first pressure, the tube may be easily moved away from the wall to allow the membrane to be tucked between the tube and wall while the second pressure seals the membrane to the wall. In an exemplary embodiment, the opening includes a flange extending away from the wall and the method further includes engaging the tube against the flange. For example, the tube may be engaged against the flange prior to the inflating steps such that the flange supports the weight of the tube. In one embodiment, the method may further include securing the membrane to the wind turbine component with one or more retainers. By way of example, the retainers may extend through bores in the flange to secure the membrane to the wind turbine component.

In one embodiment, the membrane may have a two-part construction including an inner member and an outer member that are selectively connectable to each other via one or more fasteners. The fasteners may include, for example, one or more zippers, snaps, hook and loop fasteners, etc. In any event, for this embodiment, the method may further include disposing the outer member of the membrane between the tube and the wall and subsequently connecting the inner member to the outer member. For example, the inner member may be connected to the outer member after the second inflating step. The two-part construction eases the installation process by working with only the outer member of the membrane to form the seal with the wall, which significantly reduces the weight of the membrane that technicians handle during the sealing process with the wall. The inner member may subsequently be connected to the outer member to form the complete membrane.

In a further embodiment, a method of treating air within an interior of a wind turbine component having electrical components disposed therein is disclosed. The wind turbine component includes an opening accessible to an exterior of the component and a wall about a periphery of the opening. The method includes positioning an air treatment device in the interior of the wind turbine component; installing the sealing assembly to the wind turbine component according the above to seal off the opening; and operating the air treatment device to treat the air in the interior of the wind turbine component. In one embodiment, the air treatment device may be a dehumidifier and the method may further include dehumidifying the air interior to the wind turbine component to less than about 60% humidity.

In one embodiment, the wind turbine component having an opening that is sealed by the sealing assembly may be a tower section. More particularly, the tower section may include a bottom tower section that includes one or more electronic components disposed therein, and the sealing assembly may seal off one or more of the openings in the tower section. In an alternative embodiment, the wind turbine component having an opening that is sealed by the sealing assembly may be a nacelle. More particularly, the nacelle may include an opening where the nacelle couples to the tower and the sealing assembly may seal off that opening to protect the electronic components disposed in the nacelle.

In yet another embodiment, a sealing assembly for sealing an opening in a wind turbine component is disclosed, wherein the wind turbine component includes a wall disposed about a periphery of the opening. The sealing assembly includes an inflatable tube having an inlet valve and a pressure relief valve and a flexible membrane sized to cover the opening in the wind turbine component. When the inflatable tube is inflated, the tube is configured to force the flexible membrane against the wall to seal the opening of the wind turbine component.

In one embodiment, the inflatable tube is ring shaped. In an exemplary embodiment, the flexible membrane may have a two-part construction including an inner member and an outer member that are selectively connectable to each other via one or more fasteners. In one embodiment, the inflatable tube is integrated into the outer member. For example, the outer member may include a sleeve adjacent a periphery of the flexible membrane, wherein the inflatable tube may be positioned within the sleeve.

In one embodiment, a nacelle assembly for a wind turbine includes a nacelle having an opening and a wall disposed about a periphery of the opening, and the sealing assembly covering the opening and engaging against the wall to seal the opening of the nacelle.

In another embodiment, a tower section assembly of a wind turbine includes a tower section including an opening and a wall disposed about a periphery of the opening, and the sealing assembly covering the opening and engaging against the wall to seal the opening of the tower section. The tower section may be, for example, a bottom tower section of a wind turbine tower having one or more electrical components disposed therein.

### Brief Description of the Drawings

The accompanying drawings, which are incorporated in and constitute a part of this specification, illustrate embodiments of the invention and, together with a general description of the invention given above, and the detailed description given below, serve to explain the invention.
Fig. 1 is a perspective view of a wind turbine;
Fig. 2 is a cross-sectional view of the tower sections and nacelle of the wind turbine of Fig. 1;
Fig. 3 is a cross-sectional view of the bottom tower section taken along lines 3-3 in Fig. 2;
Fig. 4 is an enlarged, cross-sectional view of the bottom tower section taken along lines 4-4 in Fig. 3 showing the installed lower sealing assembly;
Fig. 5 is a perspective view of the tube coupler in the expandable hose of the lower sealing assembly of Fig. 4;
Fig. 6 is an enlarged, cross-sectional view of the bottom tower section with the lower sealing assembly installed;
Fig. 7A is an enlarged, cross-sectional view of an alternate embodiment of the lower sealing assembly;
Fig. 7B is an enlarged, cross-sectional view of an alternate embodiment of the lower sealing assembly;
Fig. 8 is a cross-section view of a bottom tower section with a lower sealing assembly according to another embodiment of the invention;
Fig. 9 is a cross-sectional view of the bottom tower section taken along lines 8-8 in Fig. 8;
Fig. 10 is a cross-section view of a bottom tower section with a lower sealing assembly according to another embodiment of the invention; and
Fig. 11 is a cross-section view of the bottom tower section taken along lines 10-10 in Fig. 10.

### Detailed Description

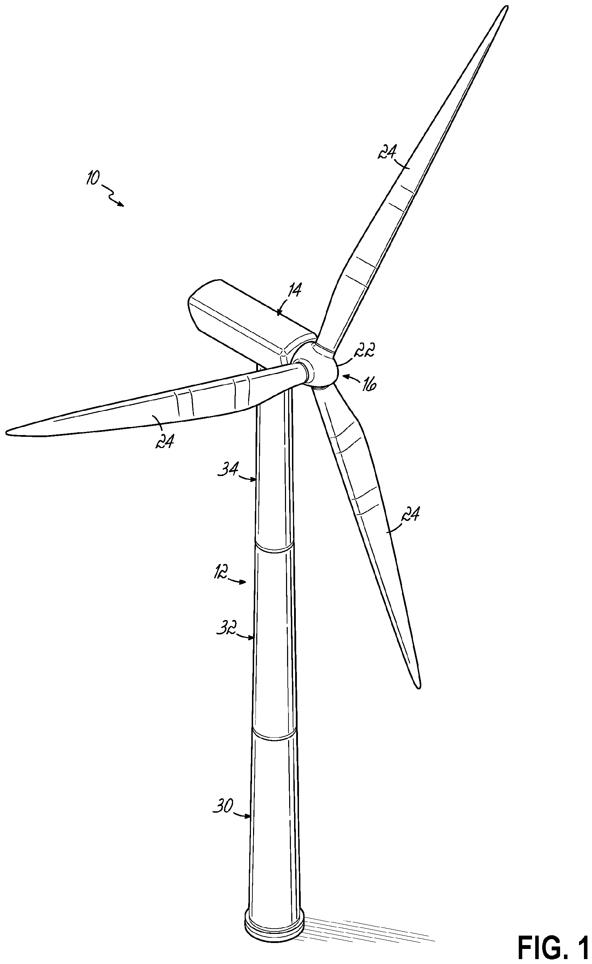

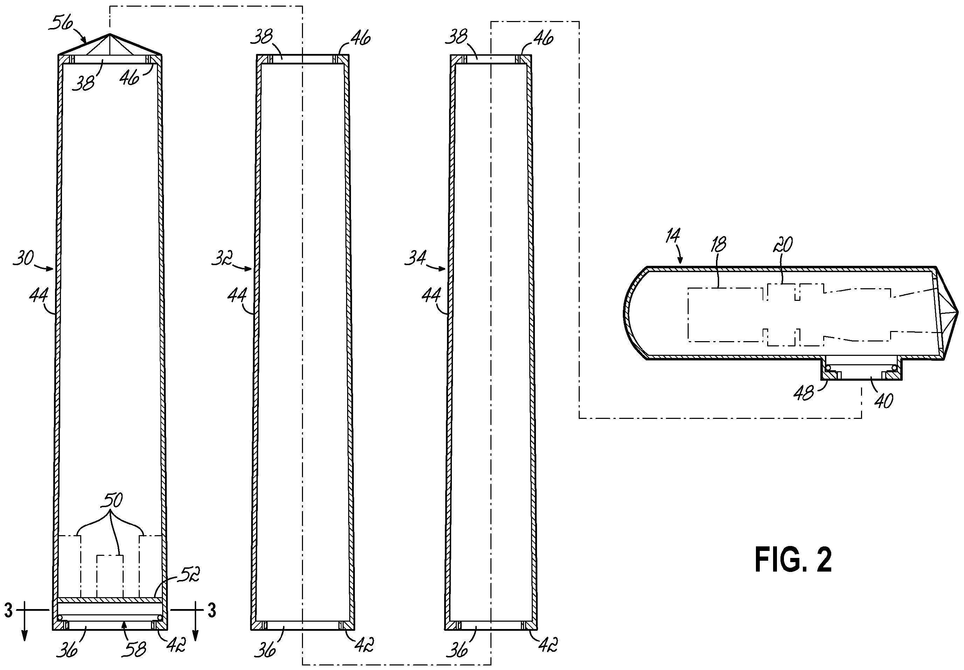

With reference to Fig. 1, a wind turbine 10 includes a tower 12, a nacelle 14 disposed at the apex of the tower 12, and a rotor 16 operatively coupled to a generator 18 (Fig. 2) housed inside the nacelle, and a gearbox 20 (Fig. 2) also housed inside the nacelle 14. In addition to the generator 18 and gearbox 20, the nacelle 14 may house various components needed to convert wind energy into electrical energy and to operate and optimize the performance of the wind turbine 10. The tower 12 supports the load presented by the nacelle 14, rotor 16, and other wind turbine components housed inside the nacelle 14 and operates to elevate the nacelle 14 and rotor 16 to a height above ground level or sea level, as may be the case, at which air currents having lower turbulence and higher velocity are typically found.

The rotor 16 may include a central hub 22 and a plurality of blades 24 attached to the central hub 22 at locations distributed about the circumference of the central hub 22. In the representative embodiment, the rotor 16 includes three blades 24, however the number may vary. The blades 24, which project radially outward from the central hub 22, are configured to interact with passing air currents to produce rotational forces that cause the central hub 22 to spin about its longitudinal axis. The design, construction, and operation of the blades 24 are familiar to a person having ordinary skill in the art of wind turbine design and may include additional functional aspects to optimize performance. For example, pitch angle control of the blades 24 may be implemented by a pitch control mechanism (not shown) responsive to wind velocity to optimize power production in low wind conditions, and to feather the blades if wind velocity exceeds design limitations.

The rotor 16 may be coupled to the gearbox 20 directly or indirectly via by a drive shaft (not shown). Either way, the gearbox transfers the rotation of the rotor 16 through a coupling (not shown) to the generator 18. Wind exceeding a minimum level may activate the rotor 16, causing the rotor 16 to rotate in a direction substantially perpendicular to the wind, applying torque to the input shaft of the generator. The electrical power produced by the generator may be supplied to a power grid (not shown) or an energy storage system (not shown) for later release to the grid as understood by a person having ordinary skill in the art. In this way, the kinetic energy of the wind may be harnessed by the wind turbine 10 for power generation.

The tower 12 may comprise multiple vertical sections that are stacked one on top of the other during the construction of the tower 12. In particular, the tower shown in Figs. 1 and 2, has a bottom tower section 30, a middle tower section 32, and an upper tower section 34. Typically, each of the tower sections 30, 32, 34 is manufactured off-site and then transported to the wind turbine site where the tower sections 30, 32, 34 are then vertically joined to form the tower 12. The nacelle 14 is also typically manufactured off-site and then transported to the wind turbine site where it is lifted atop the assembled tower 12. Each tower section 30, 32, 34 includes a lower opening 36 and an upper opening 38. When the tower sections 30, 32, 34 are stacked one on top of the other with the lower and upper openings 36, 38 aligned it essentially creates hollow tube that is the tower 12. The nacelle 14 includes a nacelle opening 40 that is configured to couple to the upper opening 38 on the upper tower section 34 when the wind turbine 10 is fully assembled. This connection may include, for example, a yaw bearing (not shown) that allows the nacelle 14 to rotate relative to the tower 12. Each of the lower openings 36 may have an annular flange 42 extending inwardly from a side wall 44 of the tower sections 30, 32, 34. The side wall 44 being positioned about a periphery of the openings 36. Similarly, each of the upper openings 38 may have an inwardly-extending, annular flange 46. The lower flanges 42 rest upon a foundation or the upper flanges 46 of the adjacent tower section and are connected via fasteners, such as bolts, during assembly of the tower 12. The nacelle opening 40 may also include an inwardly-extending annular flange 48 that rests upon and is connected, such as via the yaw bearing, to the annular flange 46 of the upper tower section 34 during assembly of the wind turbine 10.

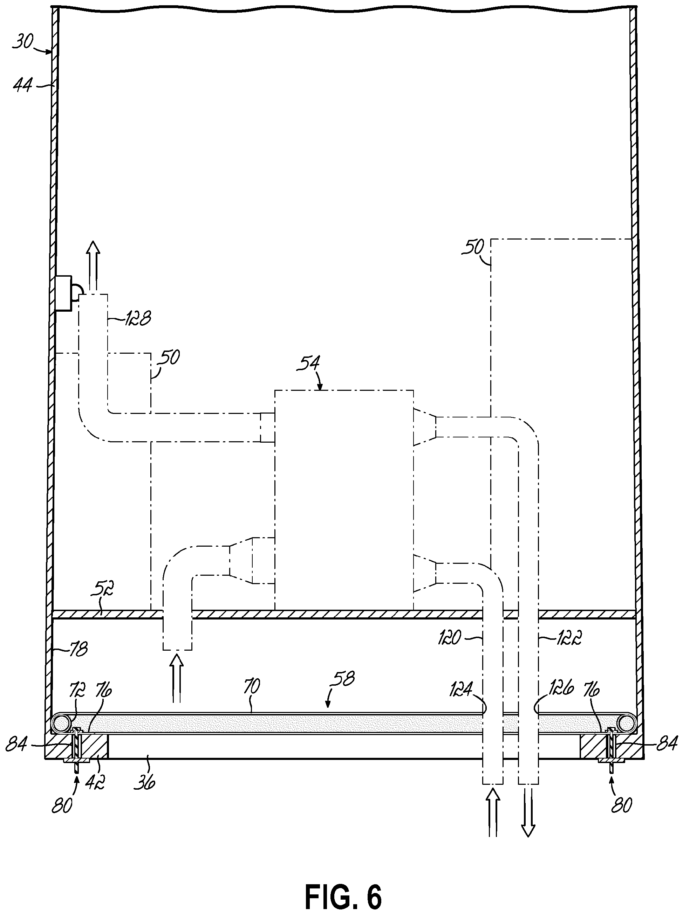

While the bottom tower section 30 is being manufactured (or soon thereafter) and before it is transported to the wind turbine site, electrical components 50 may be installed in the bottom tower section 30 such as on an interior platform 52. Electronic components may also be mounted to the interior tower wall. For example, a power module having many electronic components may be inserted into the bottom tower section 30 and secured thereto prior to transport to a wind turbine site. The tower sections 30, 32, 34 may be stored at the manufacturing facility for an extended period before being transported to the wind turbine site. To that end, the individual tower sections 30, 32, 34 may be stored vertically on tower stands, for example. To protect the electrical components in the bottom tower section 30 from excessive humidity while it is being stored, the lower opening 36 and the upper opening 38 may be sealed. Prior to sealing the openings 36, 38, an air treatment device 54, such as a dehumidifier (Fig. 6) may be placed on the platform 52 or other location in the interior of the bottom tower section 30. Once the openings 36, 38 are sealed, the dehumidifier 54 may be operated to maintain the relative humidity inside the bottom tower section 30 equal to or less than about 60% and preferably equal to or less than about 50%. The upper opening 38 of the bottom tower section 30 may be sealed by an upper sealing assembly 56 and the lower opening 36 of the bottom tower section 30 may be sealed by a lower sealing assembly 58.

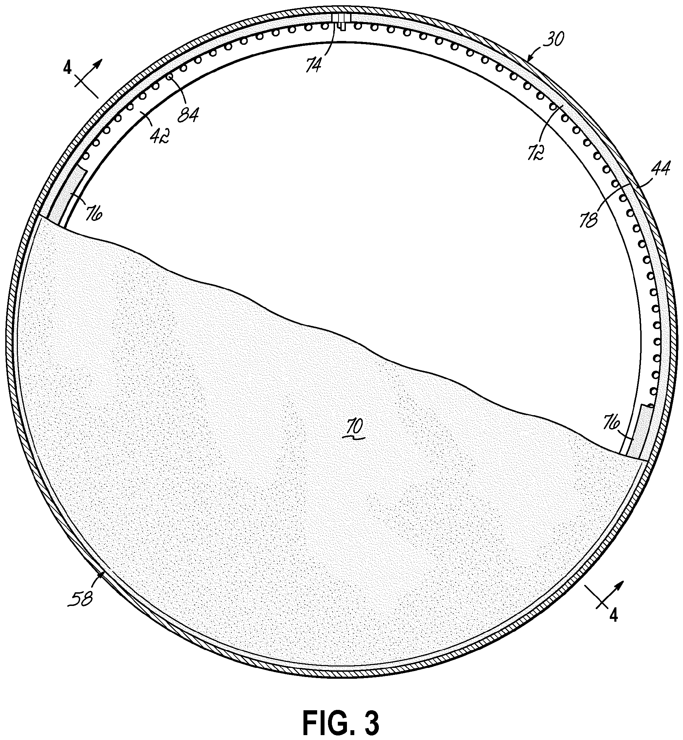

In accordance with an aspect of the present invention, and with reference to Figs. 3-5, the lower sealing assembly 58 may include a flexible membrane 70, such as a tarpaulin, and an inflatable, expandable tube 72 with a tube coupler 74. The flexible membrane 70 is sized so that a free-end portion 76 has enough length the wrap around the expandable tube 72 and extend across at least part of the annular flange 42 of the tower section 30. The expandable tube 72 is configured to apply an outward force toward an interior surface 78 of the side wall 44 of the bottom tower section 30 so as to trap and secure the flexible membrane 70 between the expandable tube 72 and the interior surface 78 of the bottom tower section 30. This force creates a seal between the flexible membrane 70 and the side wall 44.

The flexible membrane 70 may be secured in place by one or more retainers 80 coupled to the free-end portion 76. In one embodiment, the retainer 80 includes a flexible band 82 placed through a bolt hole 84 in the annular flange 42. The flexible band 82 is secured at its top via a washer 86 or other fastening arrangement that extends across the diameter of the bolt hole 84. The flexible band 82 is then partially stretched downwardly and a rod or dowel 88 is inserted through the flexible band 82 and laid across the bolt hole 84. The retainers 80 may be placed in every bolt hole 84, every other bolt hole 84, every second bolt hole 84, or any other spacing as deemed suitable. It should be understood that the retainers 80 may include other arrangements of bands, straps and fasteners to secure the flexible membrane 70 to the tower section 30 and is not limited to that shown herein.

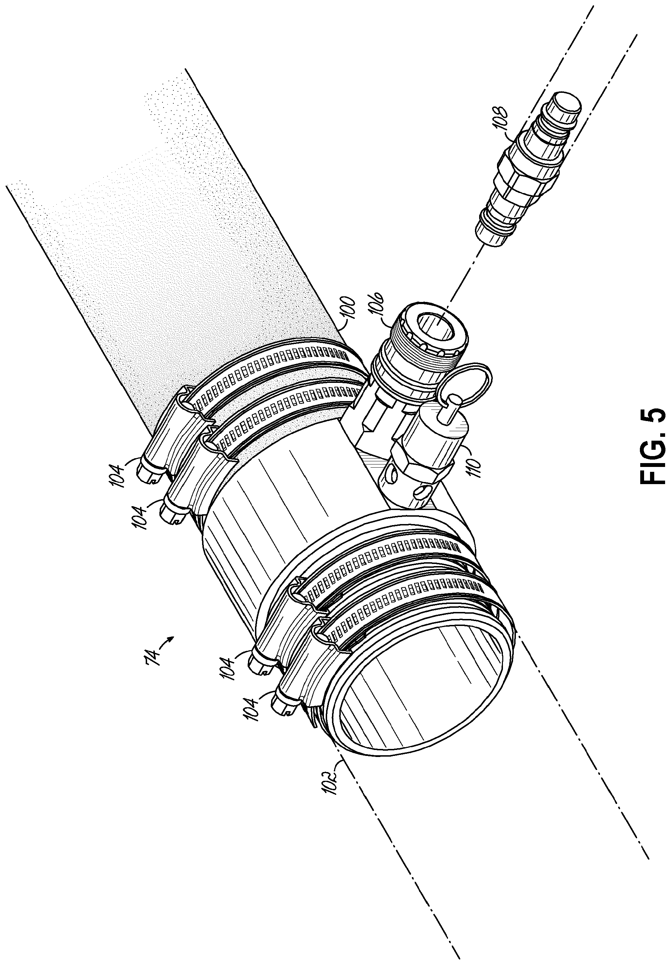

The tube coupler 74 is shown in greater detail in Fig. 5. The tube coupler 74 is configured to couple together two ends 100, 102 of the expandable tube 72 using, for example, hose clamps 104. The tube coupler 74 includes an inlet valve 106, such as a quick disconnect air fitting, configured to be connected to an air supply hose 108 so that air may be injected into the expandable tube 72 to thereby inflate the expandable tube 72 to a desired air pressure. The tube coupler 74 further includes a pressure relief valve 110 that is calibrated to open and allow excess air to escape the expandable tube 72 if the expandable tube 72 experiences air pressure over a predetermined maximum air pressure. In one embodiment the pressure relief valve 110 may be calibrated to open at a maximum air pressure of approximately 3 bar (43.5 psi). Other pressure relief valves 110, which are calibrated to open at different maximum air pressures, may also be used.

Fig. 6 illustrates the lower sealing assembly 58 sealing the lower opening 36 of the bottom tower section 30. Fig. 6 represents a typical configuration where the bottom tower section 30 has been manufactured and contains electrical components 50. To maintain the relative humidity levels within the interior of the bottom tower section 30, the dehumidifier 54 may be placed on platform 52 and the upper sealing assembly 56 (Fig. 2) and lower sealing assembly 58 may be installed. While installing the lower sealing assembly 58, one or more pipes or tubes 120, 122 from the dehumidifier 54 may be passed through preformed and selectively openable/closeable ports 124, 126 in the flexible membrane 70. The tubes 120, 122 allow air from outside the bottom tower section 30 to be brought in and wet air to be discharged outside the bottom tower section 30. A pipe or tube 128 discharges dry air from the dehumidifier 54 into the interior of the bottom tower section 30.

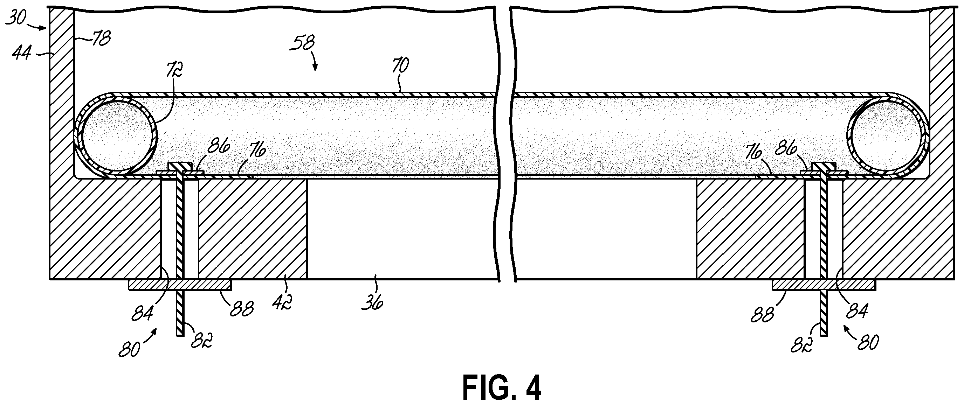

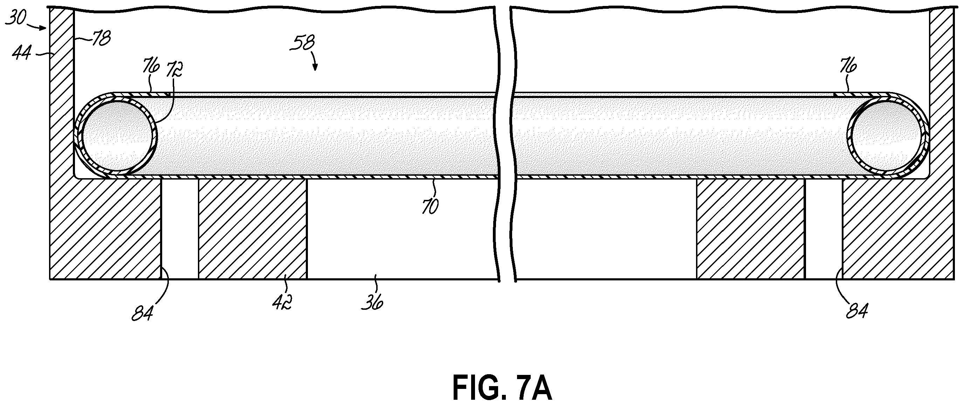

Fig. 7A shows an alternative way of wrapping the flexible membrane 70 around the expandable tube 72. In Fig. 4, the free-end portion 76 wraps around the top of the expandable tube 72 and lays across at least a portion of the flange 42. In Fig. 7A the free-end portion 76 wraps around the bottom of the expandable tube 72 and then extends across the top of the expandable tube 72. Diametrically opposed free-end portions 76 may be coupled together by different types of fasteners such as rope or flexible chords and the like. In both of these embodiments, the tube 72 exerts a force toward the side wall 44 to create a seal between the flexible membrane 70 and the side wall 44 about the periphery of the opening 36.

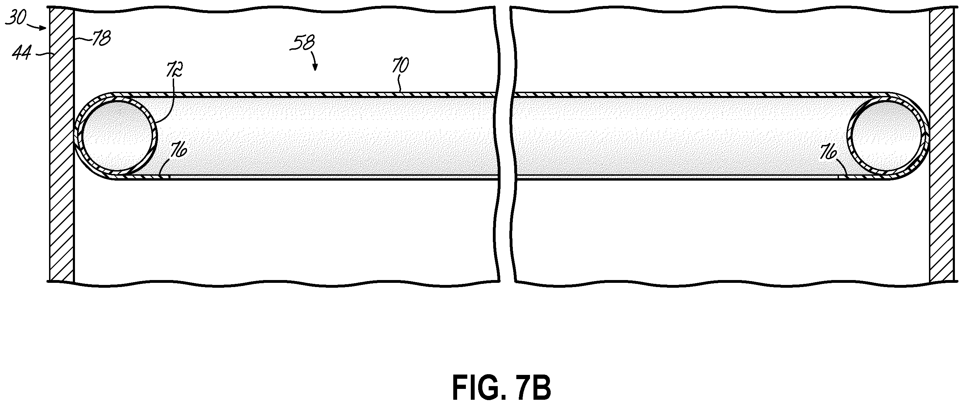

The embodiments illustrated in Figs. 4 and 7A, for example, show the lower sealing assembly 58 being supported to some degree on the flange 42. The lower sealing assembly 58, however, may also be used where there is no annular flange 42. Fig. 7B shows an embodiment where the lower sealing assembly 58 is positioned in the bottom tower section 30 away from the flange 42. In this embodiment, the expandable tube 72 may need to be inflated with additional air so that the force it exerts against the interior surface 78 of the bottom tower section 30 is great enough so that it may support the weight of both the expandable tube 72 and the flexible membrane 70 in the absence of the flange 42, which serves to partially support the lower sealing assembly 58.

To install the lower sealing assembly 58 in the bottom tower section 30, the expandable tube 72 (in a deflated condition) may be positioned on the flange 42 near the interior surface 78 of the bottom tower section 30. The air supply hose 108 is then connected to the air fitting 106 on the tube coupler 74 and air is injected into the expandable tube 72 so as to inflate the expandable tube 72 until its internal pressure reaches approximately 0.5 bar (7.25 psi). At approximately 0.5 bar, the expandable tube 72 is pressurized enough so that it becomes slightly more rigid and takes a defined ring or hoop shape around the flange 42. At this first pressure, the tube 72 may be positioned adjacent to or in slight contact with the side wall 44. The flexible membrane 70 is then spread out adjacent the lower opening 36 of the bottom tower section 30 such that the ports 124, 126 are generally aligned with the tubes 120, 122 of the de-humidifier 54 positioned on the platform 52. A small section of the expandable tube 72 is then pulled slightly towards the center of the bottom tower section 30 and away from the interior surface 78 and the free-end portion 76 is placed over the top of the expandable tube 72 and tucked between the expandable tube 72 and the interior surface 78 and across the flange 42 as illustrated in Fig. 4. This process of placing the free-end portion 76 around the expandable tube 72 continues around the entire inner circumference of the bottom tower section 30.

After the flexible membrane 70 is installed, the technician should ensure that the flexible membrane 70 is free of wrinkles where the flexible membrane 70 contacts the expandable tube 72, especially around the interior surface 78, and that it is equally spaced relative to the flange 42. Additional air is then injected into the expandable tube 72 until the internal air pressure causes the pressure relief valve 110 to open and release excess air upon which the air supply hose 108 may be disconnected from the air fitting 106. Once the pressure relief valve 110 closes, the air pressure inside the expandable tube 72 should be around 3 bar (43.5 psi). At that pressure, the expandable tube 72 exerts a force sufficient to secure the free-end portion 76 between the expandable tube 72 and the interior surface 78 of the side wall 44 to thereby seal the lower opening 36 of the bottom tower section 30. The retainers 80 may then be installed to secure the flexible membrane 70 to the flange 42. In one embodiment, the resulting installed lower sealing assembly will be configured like what is illustrated in Fig. 4. The tubes 120, 122 may then be inserted through the ports 124, 126 in the flexible membrane 70 as illustrated in Fig. 6.

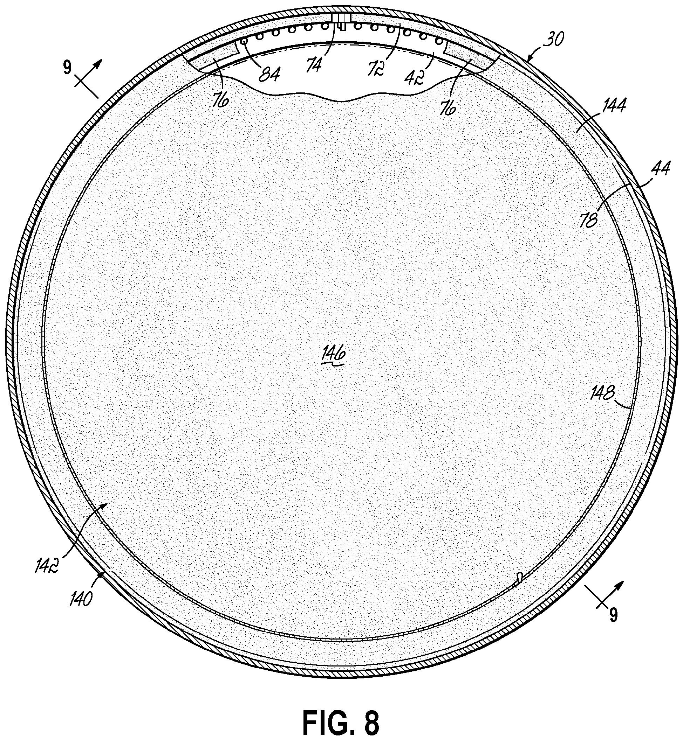

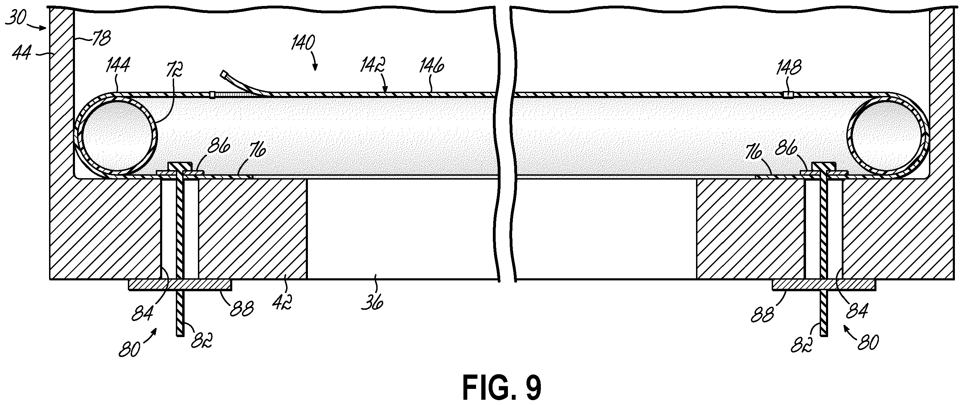

In the embodiments of the lower sealing assembly 58 shown in Figs. 3-7B, the flexible membrane 70 has a one-piece construction. Such a one-piece construction requires that the free-end portion 76 be wrapped around the expandable tube 72 as part of the larger flexible membrane 70. The one-piece, flexible membrane 70 may be quite heavy if the internal diameter of the bottom tower section is large, which is often the case. At some point, the flexible membrane 70 may be so heavy and unwieldy that it requires several technicians to install the sealing assembly 58. Figs. 8 and 9 illustrate an alternate embodiment of a lower sealing assembly 140 that addresses this issue. To that end, in an alternative embodiment, the lower sealing assembly 140 may include a flexible membrane 142 having a two-part construction. More particularly, the flexible membrane 142 may have an outer member 144 and an inner member 146 that are joined together by one or more fasteners 148, such as a zipper, hook and loop fasteners, buttons, snaps, tape, and/or the like.

During installation of the lower sealing assembly 140, the expandable tube 72 (in a deflated condition) may be positioned on the flange 42 near the interior surface 78 of the bottom tower section 30. The air supply hose 108 is then connected to the air fitting 106 on the tube coupler 74 and air is injected into the expandable tube 72 so as to inflate the expandable tube 72 until its internal pressure reaches 0.5 bar (7.25 psi) such that it becomes slightly more rigid and takes a defined ring or hoop shape around the flange 42. A small section of the expandable tube 72 is pulled slightly towards the center of the bottom tower section 30 and away from the interior surface 78 allowing the outer member 144, and preferably just the outer member 144, to be wrapped around the expandable tube 72. This process of wrapping the outer member 144 around the expandable tube 72 continues around the entire inner circumference of the bottom tower section 30 until the expandable tube 72 is wrapped with the outer member 144. With the outer member 144 in place around the expandable tube 72, the inner member 146 may be connected to the outer member 144 via the fastener 148. In one advantageous aspect, because the inner member 146 is coupled to the outer member 144 one discrete section at a time via the fastener 148, the inner member 146 may be installed by a single technician regardless of the size of the bottom tower section 30.

After the inner member 146 is coupled to the outer member 144, the technician should ensure that the outer member 144 is free of wrinkles as it wraps around the expandable tube 72, especially where the outer member 144 contacts the interior surface 78. Additional air is then injected into the expandable tube 72 until the internal air pressure causes the pressure relief valve 110 to open and release excess air, upon which the air supply hose 108 may be disconnected from the air fitting 106. Once the pressure relief valve 110 closes, the air pressure inside the expandable tube 72 should be around 3 bar (43.5 psi). At that pressure, the expandable tube 72 exerts a force sufficient to secure the outer member 144 between the expandable tube 72 and the interior surface 78 of the side wall 44 to thereby seal the lower opening 36 of the bottom tower section 30. Retainers 80 may be used to secure the lower sealing assembly 140 to the flange 42. In an alternative embodiment, it should be understood that the expandable hose 72 may be inflated to a pressure of around 3 bar before the inner member 146 is coupled to the outer member 144.

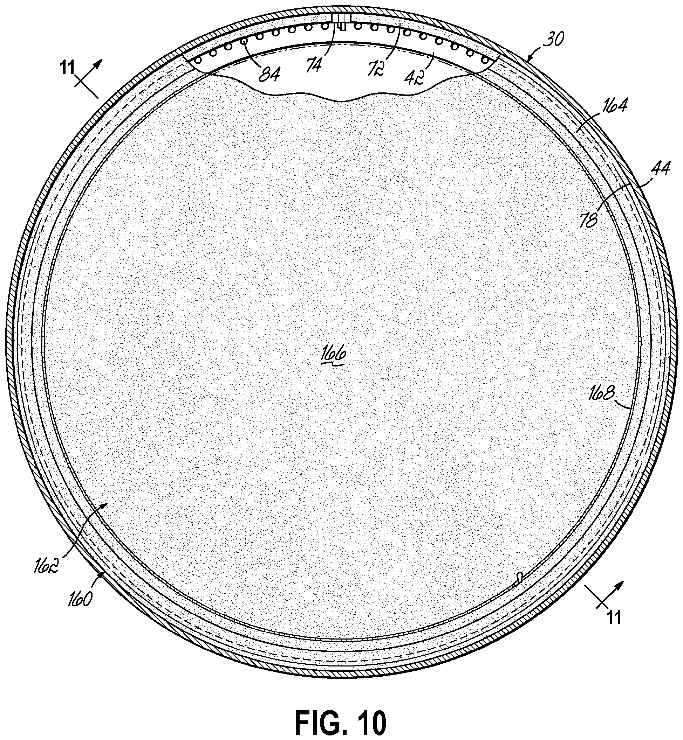

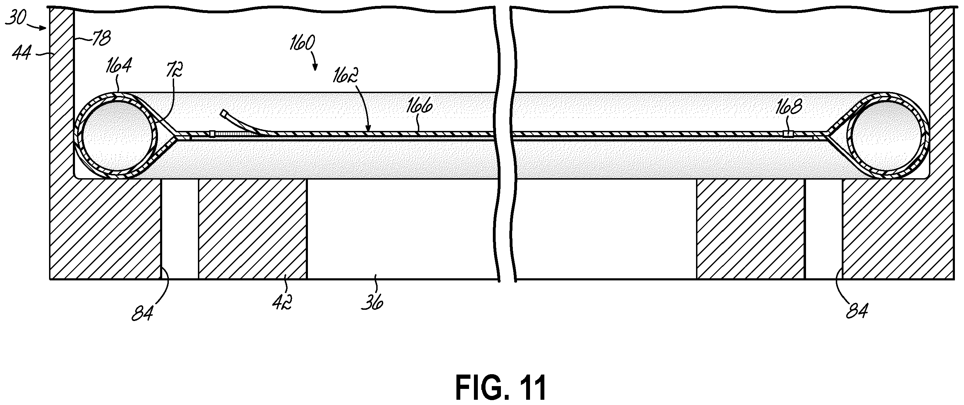

Figs. 10 and 11 illustrate a further alternate embodiment of the lower sealing assembly 140 shown in Figs. 8 and 9. In Figs. 10 and 11, a lower sealing assembly 160 includes a flexible membrane 162 with a two-part construction having an outer member 164 and an inner member 166 that are joined together by a fastener 168, such as a zipper, hook and loop fasteners, buttons, straps, tape, and the like. In this embodiment, however, the outer member 164 includes a sleeve 170 about the periphery of the flexible membrane 162. The expandable tube 72 in a deflated condition may be inserted into the sleeve 170 such that the expandable tube 72 is integrated or otherwise forms a part of the flexible membrane 162.

During installation of the lower sealing assembly 160, the flexible membrane 162 may be spread out such that the sleeve 170 containing the expandable tube 72 (in a deflated condition) may be positioned on the flange 42 near the interior surface 78 of the bottom tower section 30. The air supply hose 108 may then connected to the air fitting 106 on the tube coupler 74 and air injected into the expandable tube 72 so as to inflate the expandable tube 72 until the internal air pressure causes the pressure relief valve 110 to open and release excess air, upon which the air supply hose 108 may be disconnected from air fitting 106. Alternative, the two-step inflation process described above may also be used to ensure that the outer member 164 is free of wrinkles where it contacts the interior surface 78. In any event, once the pressure relief valve 110 closes, the air pressure inside the expandable tube 72 should be around 3 bar (43.5 psi). At that pressure, the expandable tube 72 exerts a force sufficient to secure the outer member 164 between the expandable tube 72 and the interior surface 78 of the side wall 44. With the outer member 164 in place, the inner member 166 may be connected to the outer member 164 via the fastener 168. Because the inner member 166 is coupled to the outer member 164 one discrete section at a time via the fastener 168, the inner member 166 may then be installed by a single technician regardless of the size of the bottom tower section 30. Once the inner member 166 is coupled to the outer member 164, the lower opening 36 of the bottom tower section 30 is sealed. Retainers 80 may be used to secure the lower sealing assembly 160 to the flange 42.

The above description of the lower sealing assemblies 58, 140, 160 were in the context of sealing the lower opening 36 of the bottom tower section 30 while the bottom tower section 30 is being stored and waiting to be transported to the wind turbine site. It should be readily understood, however, that the lower sealing assemblies 58, 140, 160 may also be used to seal the nacelle opening 40 (Fig. 2) while the nacelle 14 is being stored and waiting to be transported to the wind turbine site. Like the bottom tower section 30, while the nacelle 14 is being manufactured (or soon thereafter) and before it is transported to the wind turbine site, electrical components, such as generator 18, may be installed in the nacelle 14. To protect the electrical components in the nacelle 14 from excessive humidity while it is being stored, the nacelle opening 40 may be sealed. Prior to sealing the nacelle opening 40, the dehumidifier 54 may be placed inside the nacelle 14. Once the nacelle opening 40 (and any other opening in the nacelle) is sealed, the dehumidifier 54 may be operated to maintain the relative humidity inside the nacelle 14 equal to or less than about 60% and preferably equal to or less than about 50%. Either of the lower sealing assemblies 58, 140, 160 may be installed on the flange 48 (Fig. 2) of the nacelle 14 to seal the nacelle opening 40 using the installation techniques described above.

While the present invention has been illustrated by a description of various preferred embodiments and while these embodiments have been described in some detail, it is not the intention of the Applicant to restrict or in any way limit the scope of the appended claims to such detail. For example, while the above describes using the sealing assembly with tower sections and nacelles, other wind turbine components, such as wind turbine blades, may also benefit from aspects of the present invention. Additional advantages and modifications will readily appear to those skilled in the art. Thus, the various features of the invention may be used alone or in any combination depending on the needs and preferences of the user.

## Claims

1. A method of installing a sealing assembly (58, 140, 160) proximate an opening (36, 40) of a wind turbine component (30, 14), the wind turbine component (30, 14) having a wall about a periphery of the opening (36, 40), the method comprising:
providing an inflatable tube (72);
providing a membrane (70, 142, 162) sized to cover the opening (36, 40) in the wind turbine component (30, 14);
partially inflating the tube (72) such that tube is adjacent or contacts the wall about the periphery of the opening (36, 40);
disposing the membrane (70, 142, 162) between the tube (72) and the wall; and
further inflating the tube (72) such that the tube exerts a force sufficient to secure the membrane (70, 142, 162) against the wall to thereby seal the opening (36, 40) of the wind turbine component (30, 14).

2. The method according to claim 1, wherein the first inflating step inflates the tube (72) to a first pressure, and wherein the second inflating step inflates the tube (72) to a second pressure that is greater than the first pressure.

3. The method according to claim 2, wherein the first pressure is approximately 0.5 bar and the second pressure is approximately 3.0 bar.

4. The method according to any of the preceding claims, wherein the opening (36, 40) includes a flange (42, 48) extending away from the wall, and wherein the method further comprises engaging the tube (72) against the flange (42, 48).

5. The method according to any of the preceding claims, further comprising securing the membrane (70, 142, 162) to the wind turbine component (30, 14) with one or more retainers (80).

6. The method according to any of the preceding claims, wherein the membrane (142, 162) has a two-part construction including an inner member (146, 166) and an outer member (144, 164) that are selectively connectable to each other via one or more fasteners, and wherein the method further comprises:
disposing the outer member (144, 164) of the membrane (70, 142, 162) between the tube (72) and the wall; and
subsequently connecting the inner member (146, 166) to the outer member (144, 164).

7. The method of claim 6, wherein the inner member (146, 166) is connected to the outer member (144, 164) after the second inflating step.

8. A method of treating air within an interior of a wind turbine component (30, 14) having electrical components (50), the wind turbine component (30, 14) having an opening (36, 40) accessible to an exterior of the component and a wall about a periphery of the opening (36, 40), the method comprising:
positioning an air treatment device in the interior of the wind turbine component (30, 14);
installing the sealing assembly (58, 140, 160) to the wind turbine component (30, 14) according to the method of any of claims 1-7 to seal off the opening (36, 40); and
operating the air treatment device to treat the air in the interior of the wind turbine component (30, 14).

9. The method of claim 8, wherein the air treatment device is a dehumidifier and the method further comprises dehumidifying the air interior to the wind turbine component (30, 14) to less than about 60% humidity.

10. The method according to any of the preceding claims, wherein the wind turbine component (30, 14) is a tower section.

11. The method accordingly to any of claims 1-9, wherein the wind turbine component (30, 14) is a nacelle.

12. A sealing assembly (58, 140, 160) for sealing an opening (36, 40) in a wind turbine component (30, 14), the wind turbine component (30, 14) having a wall about a periphery of the opening (36, 40), the sealing assembly (58, 140, 160) comprising:
an inflatable tube (72) having an inlet valve and a pressure relief valve; and
a flexible membrane (70, 142, 162) sized to cover the opening (36, 40) in the wind turbine component (30, 14),
wherein when the inflatable tube (72) is inflated, the tube forces the flexible membrane (70, 142, 162) against the wall to seal the opening (36, 40) of the wind turbine component (30, 14).

13. The sealing assembly (58, 140, 160) of claim 12, wherein the inflatable tube (72) is ring shaped.

14. The sealing assembly (140, 160) of claim 12 or 13, wherein the flexible membrane (142, 162) has a two-part construction comprising an inner member (146, 166) and an outer member (144, 164) that are selectively connectable to each other via one or more fasteners.

15. The sealing assembly (140, 160) of claim 14, wherein the inflatable tube (72) is integrated into the outer member (144, 164).

16. The sealing assembly (140, 160) of claim 15, wherein the outer member (144, 164) includes a sleeve, and wherein the inflatable tube (72) is positioned within the sleeve.

17. A nacelle assembly for a wind turbine, comprising:
a nacelle including an opening (36, 40) and a wall about a periphery of the opening (36, 40); and
the sealing assembly (58, 140, 160) according to any of claims 12-16 covering the opening (36, 40) and engaging against the wall to seal the opening (36, 40) of the nacelle.

18. A tower section assembly of a wind turbine, comprising:
a tower section including an opening (36, 40) and a wall about a periphery of the opening (36, 40); and
the sealing assembly (58, 140, 160) according to any of claims 12-16 covering the opening (36, 40) and engaging against the wall to seal the opening of the tower section.
